# EUROPEAN PATENT APPLICATION

(11) **EP 0 685 386 A1**
(43) Date of publication of application: **06.12.1995**
(21) Application number: 94201566.0
(22) Date of filing: 02.06.1994
(51) Int. Cl.: B62K 19/16, B62K 19/22, B62K 19/28

(54) **Adapter fitting for the selective connection of a radiator to a one- or a two pipe system**

(71) Applicant: Pai, Chin-dong, Tachia Chen, Taichung Hsien (TW)
(72) Inventor: Pai, Chin-dong, Tachia Chen, Taichung Hsien (TW)
(74) Representative: Smulders, Theodorus A.H.J., Ir.

(57) **Abstract**

A method for manufacturing a bicycle frame includes the steps of (a) forming a top tube (23), down tube (24), a pair of seat stays (21), and a pair of chain stays (22) in each of which an elongated bladder is contained; (b) forming a first sub-assembly (A) which includes the head tube (25), top tube (23) and down tube (24) and forming a pair of second sub-assemblies (B) which each includes the seat stay (21), chain stay (22) and rear fork end portion (26); (c) heating the first and second sub-assemblies and inflating the elongated bladders; (d) forming the seat tube (27); (e) mounting an insert (40) respectively in one distal end of the top tube (23), down tube (24), seat stay (21), and chain stay (22), the insert (40) having a sealing layer (41) which is mounted in each of the distal ends and has a first foamable material (42) received therein and having an extension portion (43) which extends outwards of the distal ends of the top tube (23), down tube (24), seat stay (21), and chain stay (22), and is securely wrapped around a first peripheral connecting portion between the top tube (23), seat tube (27), and seat stay (21), and around a second peripheral connecting portion between the down tube (24), seat tube (27), bottom bracket shell (28), and chain stay (22); (f) applying a covering layer (51) around a first joint portion defined between the top tube (23), seat tube (27), and seat stay (21) and around a second joint portion defined between the down tube (24), seat tube (27) and chain stay (22), a second foamable material (50) being received in the covering layer (51); and (g) heating the bicycle frame assembly.

## Description

The present invention relates to a tube joining construction of a bicycle frame and a method for manufacturing the bicycle frame.

The closest prior art of a tube joining construction for a bicycle frame is disclosed in the Applicant's own copending Patent Application, U.S. serial No. 08/015,656 filed February 9, 1993. However, such an arrangement still requires a flange/shoulder engaging joint portion between the top tube, seat tube, and seat stay, and between the down tube, seat tube, and chain stay, therefore incurring considerable cost in manufacturing. In addition, such an construction is complex in lug configurations and is not easy to be produced, so increasing cost in fabricating.

The present invention has arisen to mitigate and/or obviate the above-mentioned disadvantages of the conventional tube joining construction of a bicycle frame.

The primary objective of the present invention is to provide a tube joining construction of a bicycle and a method for manufacturing the bicycle frame.

In accordance with one aspect of the present invention, there is provided a method for manufacturing a bicycle frame which includes the steps of (a) forming a top tube, down tube, a pair of seat stays, and a pair of chain stays in each of which an elongated bladder is contained; (b) forming a first sub-assembly which includes the head tube, top tube and down tube and forming a pair of second sub-assemblies which each includes the seat stay, chain stay and rear fork end portion; (c) heating the first and second sub-assemblies and inflating the elongated bladders; (d) forming the seat tube; (e) mounting an insert respectively in one distal end of the top tube, down tube, seat stay, and chain stay, the insert having a sealing layer which is mounted in each of the distal ends and has a first foamable material received therein and having an extension portion which extends outwards of the distal ends of the top tube, down tube, seat stay, and chain stay, and is securely wrapped around a first peripheral connecting portion between the top tube, seat tube, and seat stay, and around a second peripheral connecting portion between the down tube, seat tube, bottom bracket shell, and chain stay; (f) applying a covering layer around a first joint portion defined between the top tube, seat tube, and seat stay and around a second joint portion defined between the down tube, seat tube and chain stay, a second foamable material being received in the covering layer; and (g) heating the bicycle frame assembly.

Further objectives and advantages of the present invention will become apparent from a careful reading of the detailed description provided hereinbelow, with appropriate reference to the accompanying drawings.
In the drawings:
Fig. 1 is an assembly view of a bicycle frame in accordance with the present invention;
Fig. 2 is an exploded view of the bicycle frame as shown in Fig. 1;
Fig. 3 is a cross-sectional view showing the assembling of the head tube, top tube and down tube as shown in Fig. 2;
Fig. 4 is a cross-sectional view showing the assembling of the rear fork end portion, seat stay, and chain stay as shown in Fig. 2;
Fig. 5 is a cross-sectional view showing the assembling of the seat tube, down tube, a chain stay and bottom bracket shell as shown in Fig. 1; and
Fig. 6 is a cross-sectional view showing the assembling of the seat tube, top tube, and seat stay as shown in Fig. 1.

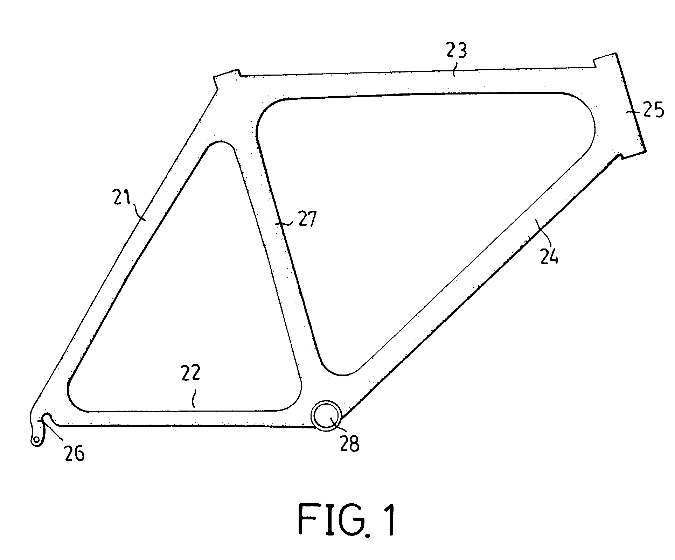

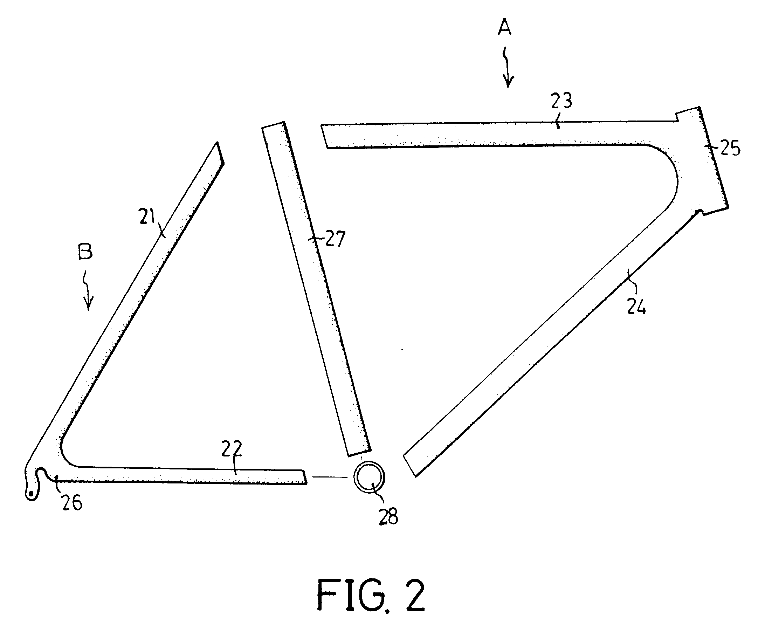

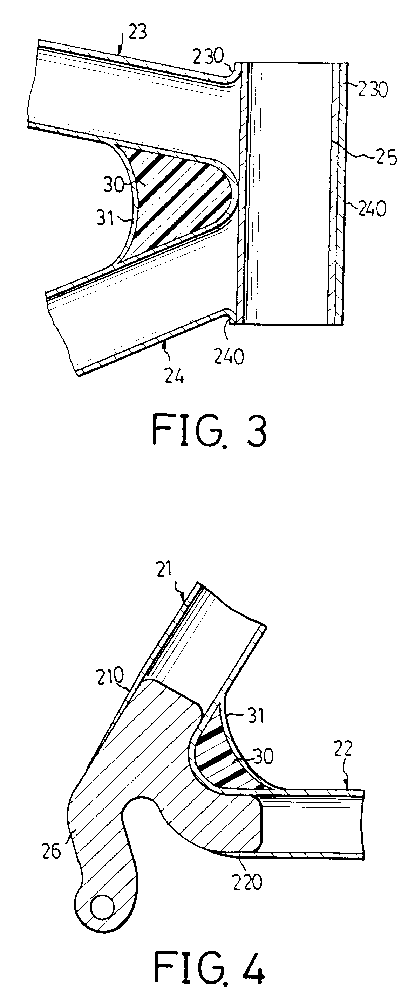

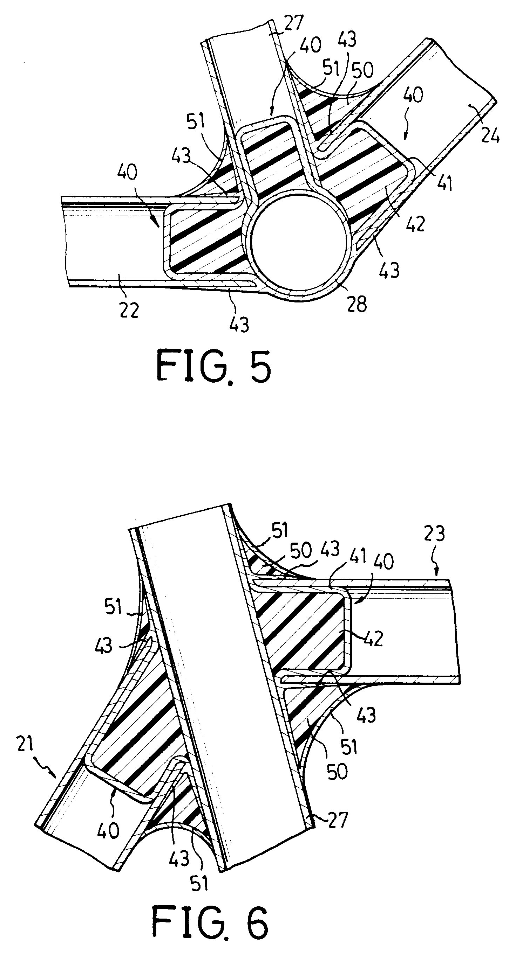

Referring to the drawings, a method in accordance with the present invention is provided for manufacturing a bicycle frame which comprises a head tube 25, a top tube 23, a down tube 24, a seat tube 27, a bottom bracket shell 28, a pair of seat stays 21, a pair of chain stays 22 and a pair rear fork end portions 26 (see Fig. 1). The method comprises the steps of:
(a) providing a plurality of plies of composite material which is wrapped around a spindle, mounting an elongated bladder between the composite material and the spindle, and detaching the spindle from the composite material to respectively form the top tube 23, down tube 24, the pair of seat stays 21 and the pair of chain stays 22 in each of which the elongated bladder is contained;
(b) cutting a first end of the top tube 23 and down tube 24 to respectively form a first forked end 230 and 240 which are securely wrapped around a peripheral portion of the head tube 25 (see Fig. 3) to form a first sub-assembly A comprising the head tube 25, top tube 23 and down tube 24 (see Fig. 2), cutting a first end of the seat stay 21 and chain stay 22 to respectively form a second forked end 210 and 220 which are securely wrapped around a peripheral portion of the rear fork end portion 26 (see Fig. 4) to form a pair of second sub-assemblies B which each comprises the seat stay 21, chain stay 22 and rear fork end portion 26 (see Fig. 2), the first forked ends 230 and 240 of the top tube 23 and down tube 24 are integrally coupled together and the second forked ends 210 and 220 of the seat stay 21 and chain stay 22 are integrally coupled together (see Figs 3 and 4), the step (b) further comprising the steps of providing a covering layer 31 respectively wrapped around a peripheral portion between the top and down tubes 23 and 24 and between the seat stay 21 and the chain stay 22 (see Figs. 3 and 4), a shock absorber 30 made of a foamable material being received in the covering layer 31;
(c) heating the first and second sub-assemblies A and B and inflating the elongated bladders in the top tube 23, down tube 24, seat stay 21 and chain stay 22 so as to form a rigid structure of the first and second sub-assemblies A and B;
(d) providing a plurality of plies of composite material made of carbon fibers and resin on a spindle, mounting a plastic tape which is contracted when heated wrapped around the plies of composite material and inputting the composite material with the plastic tape into a mold for heating so as to form the seat tube 27 with a rigid body after detaching the spindle from the composite material;
(e) mounting an insert 40 respectively in a second end of the top tube 23, down tube 24, seat stay 21, and chain stay 22, the insert 40 having a sealing layer 41 which is mounted in each of the second ends and has a first foamable material 42 received therein, the insert 40 also having an extension portion 43 which extends outwards of the second ends of the top tube 23, down tube 24, seat stay 21, and chain stay 22, and is securely wrapped around a first peripheral connecting portion between the top tube 23, seat tube 27, and seat stay 21, and around a second peripheral connecting portion between the down tube 24, seat tube 27, bottom bracket shell 28, and chain stay 22 such that the top tube 23, seat tube 27 and seat stay 21 are securely coupled together (see Fig. 6), and such that the down tube 24, seat tube 27, bottom bracket shell 28 and chain stay 22 are securely coupled together (see Fig. 5) so as to form a bicycle frame assembly comprising the first sub-assembly A, the pair of second sub-assemblies B, bottom bracket shell 28 and seat tube 27;
(f) applying a covering layer 51 around a first joint portion defined between the top tube 23, seat tube 27, and seat stay 21 and around a second joint portion defined between the down tube 24, seat tube 27 and chain stay 22, a second foamable material 50 being received in the covering layer 51; and
(g) heating and pressurizing the bicycle frame assembly to foam and expand the first and second foamable materials 42 and 50 so as to respectively exert a force against the sealing layer 41 and the covering layer 51 which are heated and pressurized to cure so as to firmly bear against each of the top tube 23, seat tube 27, seat stay 21, bottom bracket shell 28, down tube 24, and chain stay 22 such that the top tube 23, seat tube 27, and seat stay 21 are solidly coupled together and such that the bottom bracket shell 28, down tube 24, seat tube 27, and chain stay 22 are solidly coupled together.

It is to be noted that, at the steps (e) to (g), the first and second foamable materials 42 and 50 and the shock absorber 30 are made of such as E.V.A., PU, etc. The sealing layer 41 and the covering layers 31 and 51 are made of resin-impregnated fibers. In addition, the fibers includes carbon fibers, glass fibers, Kevlar fibers, and boron fibers and the resin includes thermosetting resin, thermoplastic resin, etc.

Again referring to Figs 5 and 6, a tube joint construction in accordance with the present invention is provided for a bicycle frame which comprises a top tube 23, a down tube 24, a seat tube 27, a bottom bracket shell 28, a pair of seat stays 21, and a pair of chain stays 22, the tube joint construction comprising an insert 40 respectively mounted in one distal end of the top tube 23, down tube 24, seat stay 21, and chain stay 22, the insert 40 comprising a sealing layer 41 mounted in each of the distal ends and comprising an extension portion 43 which extends outwards of the distal ends and is securely wrapped around a first peripheral connecting portion between the top tube 23, seat tube 27 and seat stay 21, and around a second peripheral connecting portion between the down tube 24, seat tube 27, bottom bracket shell 28, and chain stay 22 such that the top tube 23, seat tube 27 and seat stay 21 are securely coupled together, and such that the down tube 24, seat tube 27, bottom bracket shell 28 and chain stay 22 are securely coupled together; a covering layer 51 mounted around a first joint portion defined between the top tube 23, seat tube 27, and seat stay 21 and mounted around a second joint portion defined between the down tube 24, seat tube 27 and chain stay 22; and first and second foamable materials 42 and 50 are respectively mounted in the sealing layer 41 and the covering layer 51, the first and second foamable materials 42 and 50 are foamed and expanded when heated for respectively exerting a force against the sealing layer 41 and the covering layer 51 which are heated and pressurized to cure so as to firmly bear against each of the top tube 23, seat tube 27, seat stay 21, bottom bracket shell 28, down tube 24, and chain stay 22 such that the top tube 23, seat tube 27, and seat stay 21 are solidly coupled together and such that the bottom bracket shell 28, down tube 24, seat tube 27, and chain stay 22 are solidly coupled together.

Accordingly, by such an arrangement, a method and apparatus in accordance with the present invention has the following advantages and benefits:
(1) The tube joining construction does not require to produce any engaging device between the top tube, seat tube, and seat stay, and between the down tube, seat tube, and chain stay so as to largely decrease cost in manufacturing.
(2) The bicycle frame is integrally formed during the heating and pressurizing process, the sealing layer 41 and the covering layer 51 are heated and pressurized to cure so as to firmly bear against each of the top tube 23, seat tube 27, seat stay 21, bottom bracket shell 28, down tube 24, and chain stay 22 such that the joining portion between the top tube, seat tube and seat stay and the joining portion between the down tube, seat tube and chain stay are solidly coupled together and such that the bicycle frame has a reinforced strength.

It should be clear to those skilled in the art that further embodiments of the present invention may be made without departing from the teachings of the present invention.

## Claims

1. A method for manufacturing a bicycle frame which comprises a head tube (25), a top tube (23), a down tube (24), a seat tube (27), a bottom bracket shell (28), a pair of seat stays (21), a pair of chain stays (22) and a pair of rear fork end portions (26), said method comprising the steps of:
(a) providing a plurality of plies of composite material wrapped around a spindle, mounting an elongated bladder between said composite material and said spindle, and detaching the spindle from the composite material to respectively form said top tube (23), down tube (24), said pair of seat stays (21), and said pair of chain stays (22) in each of which said elongated bladder is contained;
(b) cutting a first end of said top tube (23) and down tube (24) to respectively form a first forked end (230) and (240) which are securely wrapped around a peripheral portion of said head tube (25) to form a first sub-assembly (A) comprising said head tube (25), top tube (23) and down tube (24), cutting a first end of said seat stay (21) and chain stay (22) to respectively form a second forked end (210) and (220) which are securely wrapped around a peripheral portion of said rear fork end portion (26) to form a pair of second sub-assemblies (B) which each comprises said seat stay (21), chain stay (22) and rear fork end portion (26);
(c) heating said first and second sub-assemblies (A) and (B) and inflating said elongated bladders in said top tube (23), down tube (24), seat stay (21) and chain stay (22) so as to form a rigid structure of said first and second sub-assemblies (A) and (B);
(d) forming said seat tube (27);
(e) mounting an insert (40) respectively in a second end of said top tube (23), down tube (24), seat stay (21), and chain stay (22), said insert (40) having a sealing layer (41) which is mounted in each of said second ends and has a first foamable material (42) received therein, said insert (40) having an extension portion (43) which extends outwards of said second ends of said top tube (23), down tube (24), seat stay (21), and chain stay (22), and is wrapped around a first peripheral connecting portion between said top tube (23), seat tube (27), and seat stay (21), and around a second peripheral connecting portion between said down tube (24), seat tube (27), bottom bracket shell (28), and chain stay (22) such that said top tube (23), seat tube (27) and seat stay (21) are coupled together, and such that said down tube (24), seat tube (27), bottom bracket shell (28) and chain stay (22) are coupled together so as to form a bicycle frame assembly comprising said first sub-assembly (A), second sub-assemblies (B), bottom bracket shell (28) and seat tube (27);
(f) applying a covering layer (51) around a first joint portion defined between said top tube (23), seat tube (27), and seat stay (21) and around a second joint portion defined between said down tube (24), seat tube (27) and chain stay (22), a second foamable material (50) being received in said covering layer (51); and
(g) heating and pressurizing said bicycle frame assembly so as to foam and expand said first and second foamable materials (42) and (50) so as to exert a force against said sealing layer (41) and said covering layer (51) respectively, said sealing layer (41) and covering layer (51) being heated and pressurized to cure so as to firmly bear against each of said top tube (23), seat tube (27), seat stay (21), bottom bracket shell (28), down tube (24), and chain stay (22) such that said top tube (23), seat tube (27), and seat stay (21) are solidly coupled together and such that said bottom bracket shell (28), down tube (24), seat tube (27), and chain stay (22) are solidly coupled together.

2. The method in accordance with claim 1, wherein said first and second foamable materials (42) and (50) are made of such as E.V.A., PU, said sealing layer (41) and covering layer (51) being made of resin-impregnated fibers, said fibers including carbon fibers, glass fibers, Kevlar fibers, and boron fibers, said resin including thermosetting resin, thermoplastic resin.

3. The method in accordance with claim 1, after said step (b), further comprising the step of providing a second covering layer (31) respectively wrapped around a peripheral portion between said top and down tubes (23) and (24) and between said seat stay (21) and said chain stay (22), a shock absorber (30) made of foamable material being received in said covering layer (31).

4. The method in accordance with claim 3, wherein said shock absorber (30) is made of such as E.V.A., PU, said second covering layer (31) being made of resin-impregnated fibers, said fibers including carbon fibers, glass fibers, Kevlar fibers, and boron fibers, said resin including thermosetting resin, thermoplastic resin.

5. The method in accordance with claim 1, wherein said step (d) comprising providing a plurality of plies of composite material made of carbon fibers and resin on a spindle and inputting said composite material into a mold for heating so as to form said seat tube (27) with a rigid body after detaching said spindle from said composite material.

6. A tube joint construction for a bicycle frame which comprises a top tube (23), a down tube (24), a seat tube (27), a bottom bracket shell (28), a pair of seat stays (21), and a pair of chain stays (22), said tube joint construction comprising:
an insert (40) respectively mounted in one distal end of said top tube (23), down tube (24), seat stay (21), and chain stay (22), said insert (40) comprising a sealing layer (41) mounted in each of said distal ends and comprising an extension portion (43) which extends outwards of said distal ends and is securely wrapped around a first peripheral connecting portion between said top tube (23), seat tube (27) and seat stay (21), and around a second peripheral connecting portion between said down tube (24), seat tube (27), bottom bracket shell (28), and chain stay (22) such that said top tube (23), seat tube (27) and seat stay (21) are coupled together, and such that said down tube (24), seat tube (27), bottom bracket shell (28) and chain stay (22) are coupled together;
a covering layer (51) mounted around a first joint portion defined between said top tube (23), seat tube (27), and seat stay (21) and mounted around a second joint portion defined between said down tube (24), seat tube (27) and chain stay (22); and
first and second foamable materials (42) and (50) respectively mounted in said sealing layer (41) and covering layer (51), said first and second foamable materials (42) and (50) being foamed and expanded when heated for exerting a force against said sealing layer (41) and covering layer (51) respectively which are heated and pressurized to cure so as to firmly bears against each of said top tube (23), seat tube (27), seat stay (21), bottom bracket shell (28), down tube (24), and chain stay (22) such that said top tube (23), seat tube (27), and seat stay (21) are solidly coupled together and such that said bottom bracket shell (28), down tube (24), seat tube (27), and chain stay (22) are solidly coupled together.
